# EUROPEAN PATENT APPLICATION

(11) **EP 1 174 815 A1**
(43) Date of publication of application: **23.01.2002**
(21) Application number: 01401881.6
(22) Date of filing: 13.07.2001
(51) Int. Cl.: G06F 17/60

(54) **A recording process for a relationship between computer users**

(30) Priority: 17.07.2000 US 617668
(71) Applicant: Pas International SA, 75009 Paris (FR)
(72) Inventor: Dreux, Vincent, 75116 Paris (FR)
(74) Representative: Cabinet Hirsch

(57) **Abstract**

The invention concerns the recording of a relationship between users of a network, such as the relationship between a client and a supplier, for invoicing the client and paying the supplier. There is provided a list of acts of each user, which each user may access through the network. According to the accesses of the users to the list, the list is updated. No user is allowed to alter acts previously recorded on the list. Thus. the list at any given time provides an overview of the history of the relationship between the users.

## Description

### Field of the Invention

The invention relates to the field of computer-run services, and more specifically to the recording of a relationship between users connected to a computer network. The invention notably applies to the recording of a "business" relationship between users.

### Background of the Invention

There exists on the market a number of products that allow users to share data or exchange information through a computer network such as the Intemet.

Groupware tools, like the product sold by Lotus under the trademark "Notes" ; also contain functionality for sharing documents, and allocating rights to users with respect to the creation, viewing or editing of documents. The product uses bases of documents distributed over different servers. Information is automatically replicated between servers, so as to synchronise data throughout the whole system. Users may access different servers and may locally update the information present on a server for local use. Rights are defined in this product by controlling the access of users to servers, databases, documents and fields. Accessing servers is authorised or not, based upon authentication of the user; in other words, this is a unique binary right, either the user is authorised to access a server or he/she is not. Once access to the server has been granted, a user may either access databases, documents, views, forms, or fields within these forms. The following rights may be granted with respect to these various elements : manager, creator, editor, author, reader, applicant; additionally, access may be denied. In this product, some users may be prevented from accessing a document. However, once the right to amend a document has been granted to a given user, there is no way to control the amendments carried out by this user.

Filepool Inc. provides under the trademark e-CLIPS a content saver; each type of digital content is associated with a given key - called an e-CLIP. The key allows the original digital content to be retrieved. Providing a key to another user allows this user to access the documents originally saved, and in this way, this system could be used for the sharing of documents, bearing in mind that there is no authentication of the user of an e-clip. However, it is essentially a storage method : once a document is associated with a key, it cannot be amended. This system is therefore unable to record a dynamic relationship between users.

There also exist a number of EDI tools, that enable data to be transmitted electronically on a point to point basis. Suppliers of EDI tools comprise, among others, Gallia or GenCode Systems Inchttp://www.gencode.com/. Services offered by both companies provide tools for point to point communication. In addition these tools have been designed for securing the communication of messages between users, but do not allow a relationship to be recorded. Brokat Infosystems A.G., Stuttgart, Germany, also provides e-business tools, the purpose of which is essentially to facilitate connection between end devices and back-end systems.

Turning to a business relationship between users, and more specifically to a sale, new problems arise. From the lax point of view, EDI may be used for sending and forwarding invoices, and for payment of invoices. At least in France, an invoice may only be transmitted in the electronic format without any paper confirmation if the EDI-link between the supplier and the client has been approved by the tax authorities. This makes it quite difficult for a business to install a fully automated and electronic invoicing system over a large client base: indeed, it would involve establishing dedicated EDI links with each individual client.

One additional problem is the reconciling of payments and accounts receivable in the accounting process. An enormous amount of time is wasted every day simply reconciling payments with invoices.

Another concern of all businesses is cash-flow. A number of prediction tools are provided for estimating cash-flow, and the timing of payments of invoices. These tools still provide nothing but an estimate of possible payments, and the information is far from being reliable.

One age-old solution for recording invoices and payments was used in former days in France. A supplier and a client were each provided with one of the two halves of a wooden rod cut along its length. For each operation, e.g. invoicing the client, both halves of the rod were put together, and a mark was made at the same time over both halves of the rod. The mark was deleted at the time payment was made, again over both halves of the rod. Each party at any given time was thus provided with the exact current position of the account with the other party. In addition, the sharing of the rod ensured that the account could not be fraudulently modified by one party - inasmuch as the marking system did not allow previous marks to be changed while the two halves of the rod were apart.

Thus, there is a need for an automated product and method for allowing the simple and efficient recording of a relationship between users of a network. The product should allow the relationship to be carried out, without hindering the relationship. The product should also provide each user with a secure record of the complete relationship

The problem is particularly acute for invoicing and payment. It applies to any type of goods and services, e. g. to insurance, telephone, water, electricity, which are usually bought on a regular basis. More generally, the invention applies to any type of relationship between users, where each user need to know past actions of the other user or of the other user(s). This may be for the purposes of invoicing one of the users; it could also be for monitoring the carrying out of an agreement, or for any other relationship where behaviour over time is important.

In the rest of the specification, for the sake of simplicity, the example of the relationship between a supplier and a client will be considered. The invention is however not restricted to this type of relationship, but may apply to the recording of any type of relationships between at least two users.

### Summary of the Invention

According to the invention, there is provided a method for recording a relationship between at least two users, comprising the steps of:
- providing a list of acts of at least one of the users;
- providing each user with an IT access to said list for recording his acts on said list, and
- updating said lists according to accesses of said users,
wherein acts previously recorded on said list may not be altered by a user accessing said list. The invention thus makes it possible for users of the service to record their relationship, on a secure and safe basis.

Preferably, the method further comprises a step of identifying a user accessing said list. This improve the reliability of the service.

In this case, it is advantageous to provide a step of authenticating the identity of a user accessing said list.

A preferred feature of the invention is that a user is allowed to read the list through its IT access. This makes it possible for each user to know at any time the exact current state of the relationship.

The invention notably applies where the relationship is a sale, and where the users comprise a client and a supplier. In this case, the process may comprise issuing a payment order to a bank of the client for paying the supplier when a payment request is recorded on said list by the client. This ensures that payment will be carried out, e. g. through the user's bank.

In another embodiment of the invention, wherein acts recordable on said list are predetermined. This feature of the invention makes it possible for users to follow a given paradigm for their relationship.

In this case, it is advantageous that the predetermined acts are only recordable on said list in a given order. This again corresponds to a given paradigm for the relationship. It is also possible to provide a step of allowing one user to select acts recordable on said list. Last, the invention may also comprise a step of providing a directory of users.

### Brief Description of the drawings

A computer service embodying the invention will now be described, by way of non-limiting example, and in reference to the accompanying drawings, where :
- figure 1 shows an overall view of a network where the invention is carried out;
- figure 2 shows a flowchart of a relationship recording according to the invention;
- figure 3 shows an example of the invention.

### Best Mode of Carrying out the Invention

The invention is now described, in its preferred embodiment of an invoicing and payment system, between two users - an invoicing party or supplier and a paying party or client. As stated above however, the invention is not restricted to this type of relationship, and may be applied to any type of time-oriented relationship between parties. The relationship may also involve more than two persons, as discussed above.

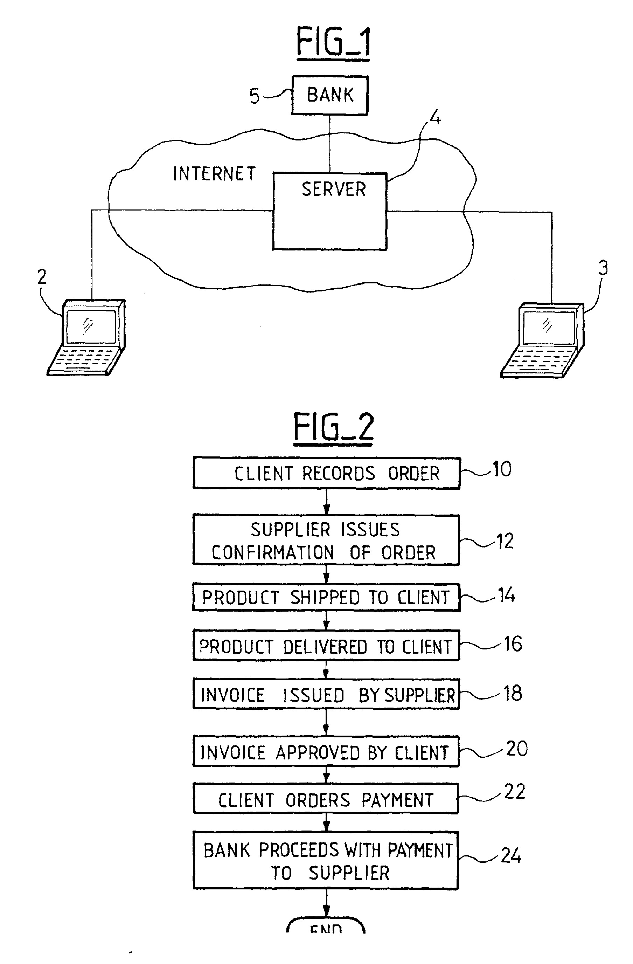

Figure 1 shows an overall view of a network to which has been the invention is applied. In the preferred embodiment of figure 1, the network is the Internet. 2 and 3 designates Internet access for two users, and could specifically be computers provided with modems or any other type of digital communication equipment. Thanks to the computers, the users may access the Internet and the server of the invention.

4 is a server where the invention is embodied. The server is also connected to a bank 5, as discussed below in reference to figure 2.

For the recording of the relationship between the two users, a list of acts of the users is provided on the server. Typically, acts that could be recorded on the list in the case of a client and supplier comprise :
- the issuance of an order for a product or service by the client to the supplier;
- the delivery or shipment of the product by the supplier;
- the receipt of the product by the client;
- the invoicing of the client
- the payment of the by the client.

The content of the list - the type and number of acts - vary according to the type of relationship concerned. As discussed below, predetermined acts may be offered to the client. The content of the list also varies with time, as explained now.

Each user is allowed to access the server through the network in order to record his/her acts on the list. For instance, the client 2 is allowed to record on the list the issuance of an order, or the payment of an invoice. Similarly, the supplier 3 is allowed to record on the list the shipment of the product or services, and the mvoicing of the client. This access is preferably a secure access, whereby each user wishing to access a list is first identified and if necessary authenticated. This ensures that the list may not be amended by anyone but the users linked by the relationship.

Any time a user records an act on the list, the list is updated. According to the invention, acts previously recorded on the list - be it by one user or by the other - may not be altered or amended by the users. This ensures that none of the users may alter the list of acts. In other words, the users are only allowed to add new acts on the list. but are unable to delete previous acts. In the example, the client 2, once he has issued the order, may not simply delete the recording of the order on the list. He may add to the list a cancellation of the order, but the list will in this case comprise not only the order, but also the cancellation of the order.

Each user may then be allowed to read the list, to know the exact status and history of the relationship with the other user. This is not compulsory, and the invention could be carried out without allowing the user to access the list. This could be the case where a user need not know the acts of the other party or parties to the relationship. For instance, where one of the users is a bank, access of the bank to the list of acts may be limited to the acts that are necessary for the bank to proceed with the requested task - e.g. proceeds with payment - the rest of the relationship being only accessible by the other users.

The specific example of a sale is now explained more fully in reference to figure 2. At step 10, the client 2 records on the server an order for a product (or service) offered by the supplier 3. The list is opened at the same time. The process proceeds to step 12.

At step 12, the supplier 3 is warned of the order, and issues a confirmation of the order. The list is updated accordingly. The process proceeds to step 14.

At step 14, the supplier 3 ships the product to the client 2. The list is updated by the supplier 3, or by the carrier shipping the product. The process proceeds to step 16.

At step 16, the product is delivered to the client 2. The list is again updated, e. g. by the client 2 or by the party delivering the product. The process proceeds to step 18.

At step 18, the invoice is issued by the supplier 3. The list is updated, and the process proceeds to step 20.

At step 20, the client 2 approves the invoice. The list is updated, and the process proceeds to step 22. At that time, by re-accessing the list, the supplier 3 may know that the payment is likely to be processed, or at least that he/she is supposed to receive the money. Like any previous steps, the approval may be binding if the server is secure, and if each party is authenticated.

At step 22, the client 2 orders payment of the invoice. The list is updated, and the server 4 then automatically issues an order to the bank 5 of the client, and provides all information necessary for paying the supplier 3 - the bank of the supplier, the amount of the sale, and the like. The process proceeds to step 24. The process is over for the client 2.

At step 24, the bank 5 of the client 2 proceeds with the wire transfer of the price of the product to the bank of the supplier 3. At the same time, the bank may update the list. The bank may not be allowed to read the rest of the information. The process is over.

As seen at any time, the users may know the exact status of their relationship.

The invention was discussed above in the specific case of two users. It applies more generally to any number of users in a relationship. For instance, still in the example of the billing of a product, the users could comprise, in addition to the supplier and to the client, a banker, a factoring company. The bank may be able to see the list of acts inasmuch the client requires through the service that a payment be made by the bank. In the case of a factoring company, the factoring company may be able to consult and update the list of acts inasmuch as this is necessary for recovering payment of the invoice.

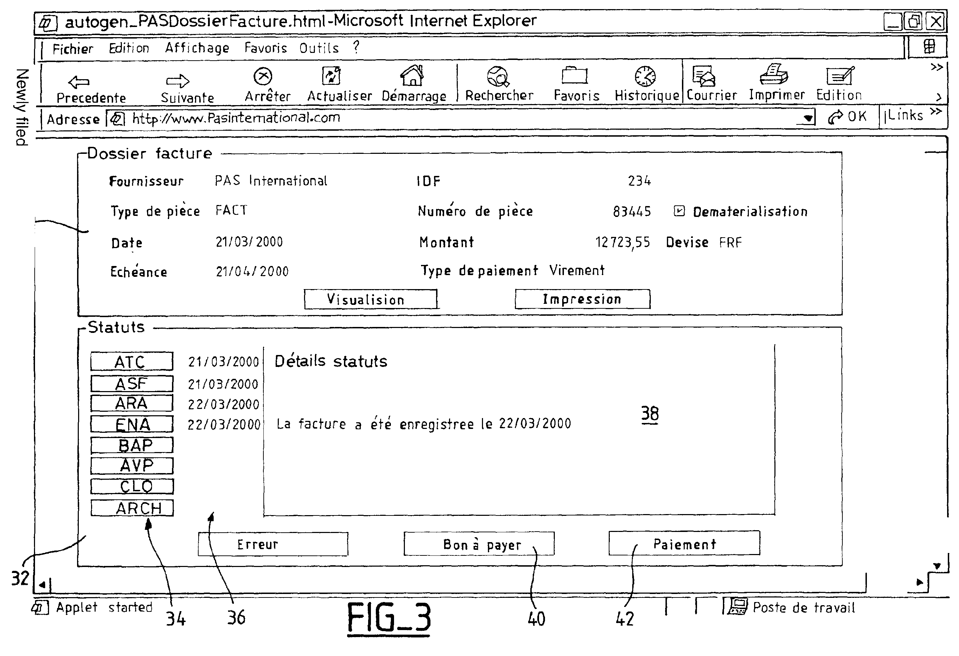

Figure 3 shows a printout of a screen in a preferred embodiment of the invention. The embodiment of figure 3 relates to a billing, and shows the screen that the client may access, once the invoice ha been created. The invoice may be created manually by the supplier, if necessary with the help of a directory of companies subscribing to the service; this is especially suitable if the supplier does not have to issue a great number of invoices. It is also a preferred feature of the invention to allow users of the service to generate invoices or invoices directly from their proprietary accounting software. According to this feature of the invention, a user or subscriber may simply create an invoice in the service, for another subscriber to the service, simply by creating the invoice in his/her own accounting software, and by allowing the invoice to be exported to the service. To this purpose, the invention proposes using translation machines, for translating proprietary formats to a format unique to the service. This allows the service to be used easily by subscribers, without imposing any new proprietary handling of information.

As shown in figure 3, the screen is comprised of two parts. The upper part 30 provides all information concerning the invoice; in the example, this information comprises the supplier, the identity of the supplier in the directory of users, the type of invoice - invoice or credit note -, an invoice number, a date, an amount in a given currency, a due date, and the type of payment selected; more information may be recorded and displayed, if necessary. This upper part of the screen may clearly vary according to the type of relationship. As discussed, the displayed information may vary according to the user accessing the service. For instance, if the supplier accesses the service, he is provided with a similar screen; however, the information on the upper part of the screen would correspond to the client. The upper part of the screen also provides the user with the ability to view the information - for completing or updating the information; it also provides the user with the ability to print the information, e. g. for obtaining a paper version of the invoice or invoice.

The lower part 32 of the screen shows the list of acts carried out by each user. In the example, these acts predetermined, possible acts being referenced as statuses. In addition to being predetermined, acts should be carried out in a given order, each act being only recordable by a given user. An act corresponding to a given status is simply recorded in this example by recording in the service the date at which the corresponding act was carried out by the user. As discussed above, an act may not be deleted or ignored once it is entered. Thus, the left part of the screen provides a list of statuses 34, together with corresponding dates 36 and a detailed explanation 38. As discussed below, the lower part of the screen also allows the user to record acts in the service.

The statuses displayed in the embodiment of figure 3 are now discussed. The first status - ATC in the example - is an acknowledgement of receipt of the invoice by the service. It is normally entered once an invoice is created by a user acting as a supplier, and is transmitted by the user to the service. This act corresponds to the supplier issuing an invoice, received first by the service. As briefly explained before, the invoice is issued to a client that subscribes or accesses the service. At that time - unless the second status is active - the invoice is accessible on the service to the supplier and to the client.

The second status - ASF - is representative of the sending of the invoice to a factor; this status is used in the case where the supplier uses a factor for recovering the invoice. The status appears on the screen of the client, so that the client may identify the factor, for proper payment of the invoice. This status may be updated or entered into by the supplier- but not by the client. Further refinement of the statuses are possible : for instance, the factor may be granted the right to accept or refuse the proposed invoice. After the invoice is accepted by the factor (if there is one), the invoice becomes accessible to the client.

The third status - ARA in the example - is simply representative of the fact that the invoiced user - the client - has consulted or viewed the invoice. It is a preferred feature of the invention that the client is not able to view fully all information relating to the invoice before acknowledging receipt of the invoice. This is an incentive for the invoiced user not only to consult invoices, but rather to acknowledge receipt of the invoice. Even if the invoiced user only consults the invoice, the change of status - from ASF to ARA or from ATC to ARA - indicates to the supplier that the invoice was consulted by the client.

The fourth status - ENA in the example - corresponds to an acknowledgement of recording of the invoice by the invoiced user, in other words, to the logging of the invoice in the client's system. If and when the client records this act, the invoice may be printed, and all information recorded by the supplier may be accessed. Part of the information - e. g. the type of payment - could be changed, but the key information, as discussed above, may not be amended by the invoiced user. In addition, if the invoiced user has accepted a fully paper-less handling of invoices, the third status is an irrevocable acknowledgement of receipt of the invoice. In this respect, it should be noted that from the point of view of State regulations - e.g. for tax purposes - there is no necessity for the invoicing party and for the invoiced party to record their point to point relationship with the State authorities. On the contrary, according to a preferred feature of the invention, the service as such is recorded with the State authorities, and ensures compliance with the applicable rules. This means that the users of the service need not care about recording with the State authorities their EDI-links. On the contrary, the fact that both the invoicing party and the invoiced party are users of the service is sufficient for complying with regulations on EDI-links. This is a distinctive feature of the service.

In the example of figure 3, a detailed explanation of the current or last status is provided, in the right part of the figure. The figure shows the state of the list of acts after the invoiced user has recorded the invoice. In this case, the date at which the invoice was recorded is displayed at 36, together with an explanation of the keyword for the status at 38.

The fifth status - BAP in the example - is representative of the acceptance of the invoice for payment by the invoiced user. By recording the corresponding act, the client indicates that the invoice is good to pay - this representing for the supplier an indication that the invoice will eventually be paid. At this step, various choices may be offered to the client, such as :
- accepting the invoice for payment as such;
- accepting the invoice for payment, notwithstanding changes to the payment process (due date, type of payment, and the like);
- refusing the invoice, in which case the reason for refusing the invoice may be indicated by the client and transmitted to the supplier.

The service thus allows negotiation between supplier and client for a given invoice, in a secure environment; in addition, any exchange is recorded in the service, and may later be used as evidence. The service facilitates the handling of litigation between client and supplier.

The sixth status - AVP in the example - is an advice of payment to the invoicing party. In the order of acts discussed above, the acceptance for payment should follow the recording of the invoice; this status may however be skipped, should immediate payment be decided. This appears on figure 3 inasmuch as the user is offered to accept the invoice for payment at 40, or to pay the invoice at 42. Clicking (or selecting in any other possible method) at 40 or 42 has the effect of recording the corresponding act, at the current time and date. Specifically, clicking at 40 would result in the current date being recorded irrevocably at 36 on the fifth line - BAP - while clicking at 42 would result in the current date being recorded irrevocably at 36 on the sixth line - AVP. It should be noted that several types of payment may be possible, so that the invoiced user may be provided with an additional screen for selection of the type of payment. These may comprise payment through the service, payment outside of the service, etc.

As this is the case for the invoicing, acceptance for payment may be entered manually, or may result from an export from an accounting software. Thus, the service of the invention may be implemented, without any change to in-house procedures of the invoicing user or of the invoiced user.

The last two statuses in the example of figure 3 correspond to the closing - CLO - of the relationship, and to a backup and archiving of the invoice - ARCH. The closing of the relationship may be recorded by the invoicing party, as an acknowledgement of receipt of the payment, while the backup and purge would be recorded by any of the users, or could be recorded automatically after a given time period.

Figure 3 thus shows an example of a list of acts according to the invention. In addition, it shows that acts may be predefined, or may need to be carried out in a given order by a given user.

The acts or statuses discussed in the embodiment of figure 3 are representative of a given relationship between two users. The example of figure 3 shows that the acts of a given user may be restricted in the relationship. For instance, the recording of the sending of the invoice to a factor would typically be only possible for the supplier, or for the manager of the service upon a specific agreement with the supplier. Recording an act corresponding to acceptance for payment (BAP) or payment (AVP) is only possible for the client. In addition, the example shows that the service provides a paradigm of the relationship between the users. According to a preferred feature of the invention, the service makes it possible for a user to predefine a number of possible relations with other users. In the example of figure 3. invoicing a party was represented by a series of eight statuses, that is by a series of eight possible acts in the service. As an example of paradigm, it is possible for the supplier to predefine the status ASF, so that any bill above a given amount is sent to a factor, e. g. to a factor selected according to the client. It is also possible for the client to predefine the status BAP, so that payment is automatically carried out by the service, through a wire transfer order to a bank of the invoiced party issued on behalf of the invoiced party; AVP would in this case automatically be updated by the service according to an agreed upon payment deadline predefined in the paradigm. As a further example of paradigm, the date for the backup and purge of the invoice could be predefined by the invoicing user and the invoiced user.

According to a preferred embodiment of the invention, predefined acts may be recorded by users of the services. These acts may be described and disclosed in an agreement between the user and the service, so that a given legal obligation is attached to a given act among the list of possible acts. The service thus provides the users with the ability to define specifically the acts to be recorded in the service. Users may also attach legal consequences to the recorded acts, simply by a proper undertaking in an agreement with the service.

It is a preferred feature of the invention to offer at least some standard acts - such as an invoicing act, a request for refinancing, or the like. When such a standard act is entered, the user may simply have to provide the identity of the other party or parties. For instance, an invoicing party may select first the invoicing act, then provide an identification of the invoiced party together with the amount of the invoice and any other relevant information. The possible statuses or acts would then be predefined.

The invention thus allows relationships between users of the service to be finely tuned, according to the needs of each pair of users of the service.

Although the invention has been explained in reference to preferred embodiments, it should be understood that it is not limited to these embodiments, and that various changes or modifications can be contemplated by the person skilled in the art, without departing from the spirit of the invention. Accordingly, the scope of the invention shall be determined only by the appended claims and their equivalents.

## Claims

1. A method for recording a relationship between at least two users, comprising the steps of
- providing a list of acts of at least one of the users;
- providing each user with an IT access to said list for recording his acts on said list, and
- updating said lists according to accesses of said users,
wherein acts previously recorded on said list may not be altered by a user accessing said list.

2. The method of claim 1, further comprising a step of identifying a user accessing said list.

3. The method of claim 2, further comprising a step of authenticating the identity of a user accessing said list.

4. The method of claim 1, further comprising allowing a user to read the list through its IT access.

5. The method of claim 1, wherein said relationship is a sale, and wherein said users comprise a client and a supplier.

6. The method of claim 5, further comprising a step of issuing a payment order to a bank of the client for paying the supplier when a payment request is recorded on said list by the client.

7. The method of claim 1, wherein acts recordable on said list are predetermined.

8. The method of claim 7, wherein said predetermined acts are only recordable on said list in a given order.

9. The method of claim 1, further comprising a step of allowing one user to select acts recordable on said list.

10. The method of claim 1, further comprising a step of providing a directory of users.
